# EUROPEAN PATENT SPECIFICATION

(11) **EP 0 856 238 B1**
(45) Date of publication and mention of the grant of the patent: **26.05.1999**
(21) Application number: 96934534.7
(22) Date of filing: 04.10.1996
(51) Int. Cl.: H04R 1/02, H04R 17/00, H04R 7/04, G10K 11/178, B60R 11/02

(54) **SOUND REPRODUCTION SYSTEM FOR VEHICLES**
SCHALLWIEDERGABESYSTEM FÜR KRAFTFAHRZEUGE
SYSTEME DE REPRODUCTION DE SONS DESTINE A DES VEHICULES

(30) Priority: 20.10.1995 IT TO950857; 01.02.1996 IT TO960065; 17.04.1996 IT TO960296
(43) Date of publication of application: 05.08.1998
(73) Proprietor: C.R.F. Societa' Consortile per Azioni, 10043 Orbassano (Torino) (IT)
(72) Inventor: RUSPA, Giacomo, Strada Torino, 50 I-10043 Orbassano (IT)
(74) Representative: Buzzi, Franco
(86) International application number: EP9604317
(87) International publication number: WO9716048

(56) References cited:
- EP-A- 0 054 945
- EP-A- 0 618 564
- DE-A- 4 238 924
- GB-A- 2 252 657
- PATENT ABSTRACTS OF JAPAN vol. 016, no. 332 (E-1236), 20 July 1992 & JP 04 097697 A (MURATA MFG CO LTD;OTHERS: 01), 30 March 1992,
- PATENT ABSTRACTS OF JAPAN vol. 012, no. 052 (M-668) & JP 62 198541 A (MITSUBISHI ELECTRIC CORP)
- PATENT ABSTRACTS OF JAPAN vol. 012, no. 352 (M-744), 21 September 1988 & JP 63 110047 A (TOYODA GOSEI CO LTD), 14 May 1988,
- PATENT ABSTRACTS OF JAPAN vol. 007, no. 080 (E-168), 2 April 1983 & JP 58 008000 A (MURATA SEISAKUSHO:KK)

## Description

### Field of the invention

The present invention is generally related to sound reproduction systems, comprising sound pick-up means (for detecting a sound recording from a disk or magnetic tape support) or sound receiving means (a radioreceiver), amplifier means and sound emitter means.

### Prior art

Traditionally in the above-referenced sound reproduction systems the sound emitter means are constituted by one or more loudspeakers having vibrating diaphragms activated by suitable transducers-actuators so as to irradiate the sound energy. These loudspeakers have a more or less complicated and anyhow normally expensive construction, and installation thereof, particularly as far as sound reproduction systems placed on board of vehicles (automobiles, bus, industrial vehicles, agricultural tractors and earth-moving machines, aircrafts, railvehicles, etc.) are concerned, is relatively difficult and restricted by the limited available space. Moreover the acoustical performances of the conventional sound reproduction systems installed on board of vehicles are remarkably penalized as compared to similar sound reproduction systems employed, for instance, within domestic environments. These limits derive from the background noise of the vehicle passenger compartment and from the fact that within the passenger compartment the sound emitting means (conventional loudspeakers), the sound reflecting surfaces and the audience are generally quite close to one another. Direct and reflected sound waves reach nearly simultaneously the ears of the vehicle passengers and, therefore, that appreciable effect which is named "diffused field", which characterises larger environments, is missed. In order to overcome this drawback, and thus to create diffused field situations, delays may be introduced among the various loudspeakers, so as to generate artificial reverberation effects. These expedients are however complicated, and generally give rise to unnatural and thus unpleasant effects for the listener.

A more efficient solution for generating diffused field situation is disclosed, with particular reference to aircrafts, in GB-A-2020509, according to which electro-magnetic excitation actuators are applied to inner lining panels of the fuselage, particularly lining panels formed in a honeycomb or sandwich construction and resiliently connected to the outer load-bearing structure. Accordingly, these inner lining panels are vibrated so as to produce audio-frequency sounds, thus producing a uniform sound distribution.

Similar solutions, specifically applied to automobiles, are also known from EP-A-0054945, US-A-4,551,849 and US-A-4,720,867. According to these documents, an electro-magnetic excitation device is also employed, which is connected to a panel forming part of the vehicle structure, particularly for low frequencies generation. Even in this case the panel is an inner lining element, namely a door trim or a rear parcel shelf.

A further solution is disclosed in WO 90/13109 and GB-A-2252657, showing a sound generation system for use in a vehicle to create particular effects such as the peculiar sound of a high performance car. This system makes use of vibrators mounted on vehicle panels, which may also be part of an active noise cancellation device. Neither the vibrators nor the panels on which these vibrators are mounted are disclosed in detail in the above two documents.

Active noise cancellation systems employing piezo-electric transducers are also known in the art, for instance from EP-A-0618564, specifically related to a railway vehicle, and from WO 95/07530, specifically directed to a stationary installation. These active noise cancellation systems are unsuitable for generating entertainment audio-frequency sounds, namely music and the like, with the required fidelity.

In more general terms, none of the systems known from the above-referenced prior documents enables generation of diffused field sound effects with a high quality reproduction within a wide range of audio-frequencies and without negative directionality results, with the clearness and brilliantness required in the case of musical reproductions.

### Statement of the invention

The object of the present invention is to provide a sound reproduction system for vehicles overcoming the above drawbacks.

In order to achieve this object, the invention is directed to a sound reproduction system for vehicles, comprising sound pick-up or sound receiver means, amplifier means and sound emitter means including vibrating means operatively associated to at least one panel forming part of a vehicle structure and adapted to vibrate so as to produce audio-frequency sound, the main feature of which resides in that:
- said at least one panel consists of an outer sheet metal wall of the vehicle body to which a generally rigid inner lining wall is connected in a known way,
- said vibrating means comprise at least one piezo-electric thin-plate actuator/transducer, known per se, rigidly secured to the inner surface of said outer sheet metal wall, at a spaced-apart location relative to said inner lining wall.

Preferably, said at least one piezo-electric thin-plate actuator/transducer is fixed in correspondence of a substantially concave area of the body outer wall, and a fitting and connecting rigid pad element is interposed between the piezo-electric thin-plate actuator/transducer and said concave area of the body outer wall. This pad element is conveniently formed by a layer of high elasticity modulus resin, preferably a two-component epoxy resin, so as to ensure the maximum rigidity degree to the joint between the piezo-electric actuator/transducer and the body outer wall.

According to a preferred embodiment of the invention, the sound reproduction system comprises a plurality of said piezo-electric thin-plate actuators/transducers applied to the body outer walls defining the lateral doors and the roof of the vehicle, respectively.

By virtue of this arrangement, the sound reproduction system according to the invention produces in operation surrounding effects by the sound field inside the passenger compartment of the vehicle. This acoustical effects derive from the remarkable extension of the sound scattering surfaces, in a somehow "wrapping around" configuration relative to the audience, i.e. the passengers within the car. Arrangement of the piezo-electric thin-plate actuators/transducers secured to the outer metal sheets of the vehicle body enables to obtain rich and complex vibration modes, and consequently a quality and a fidelity of sound reproduction, particularly of music, which are surprisingly high, and not even comparable with the solutions according to the prior art wherein the vibrating elements are applied to inner lining panels. This is due to the fact that, in accordance with the arrangement of the invention, the sounds produced by the vibrations of the outer sheet metal walls of the body are extremely brilliant and clear, with a high and well balanced modal density over the whole audible spectrum. The inner lining walls or panels associated to the outer sheet metal walls to which the piezo-electric thin-plate actuators/transducers are secured, besides defining with these outer walls harmonic-box elements promoting low frequency production, damp and absorb the acoustic energy associated with the high frequency sound waves. On the other hand, vibrational response promptness of the outer sheet metal walls leads to a remarkable sound clarity in the opening transients.

In summary, the sound reproduction system according to the invention allows surprisingly to obtain sound emissions of very high quality, over a widest audio-frequency range.

### Brief description of the drawings

Further features and advantages of the invention will become apparent from the following detailed description, with reference to the accompanying drawings purely provided by way of non-limiting example, in which:

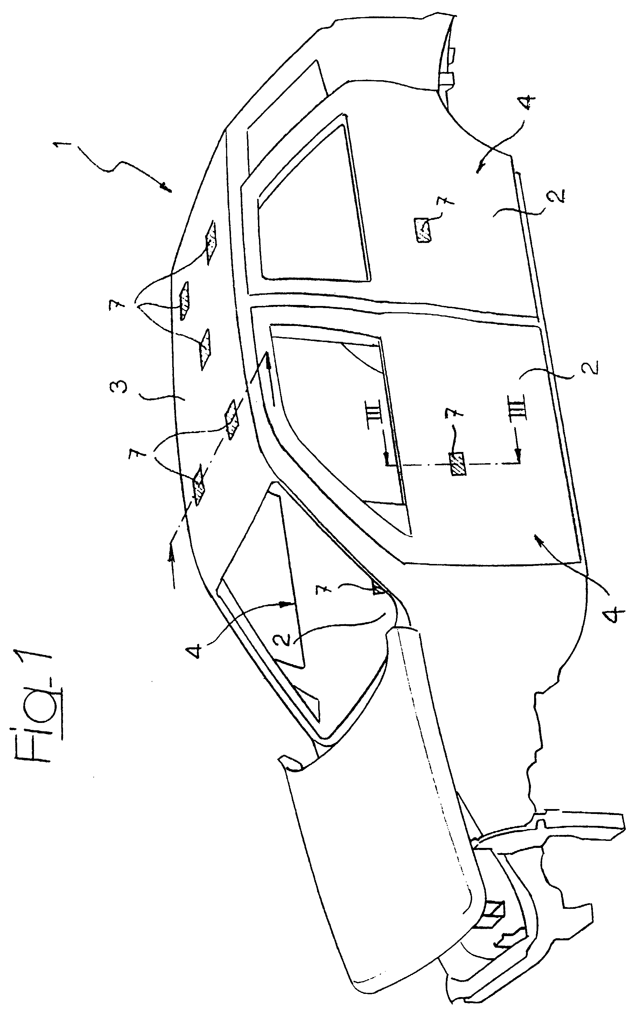

figure 1 is a diagrammatic perspective view showing the body of a motorvehicle provided with a sound reproduction system according to the invention,
figure 2 is a diagrammatic view showing one configuration example of the sound reproduction system,
figure 3 is a sectioned and enlarged view along line III-III of figure 1,
figure 4 is an elevational and partially broken-away view of a component of the body shown in figure 1, and
figure 5 is a sectioned and enlarged view along line V-V of figure 1.

### Detailed description of preferred embodiments of the invention

Referring to the drawings, reference numeral 1 designates the body of a motor vehicle comprising sheet metal panels 2,3 defining the outer walls of the lateral doors 4 and of the roof 5, respectively, of the vehicle.

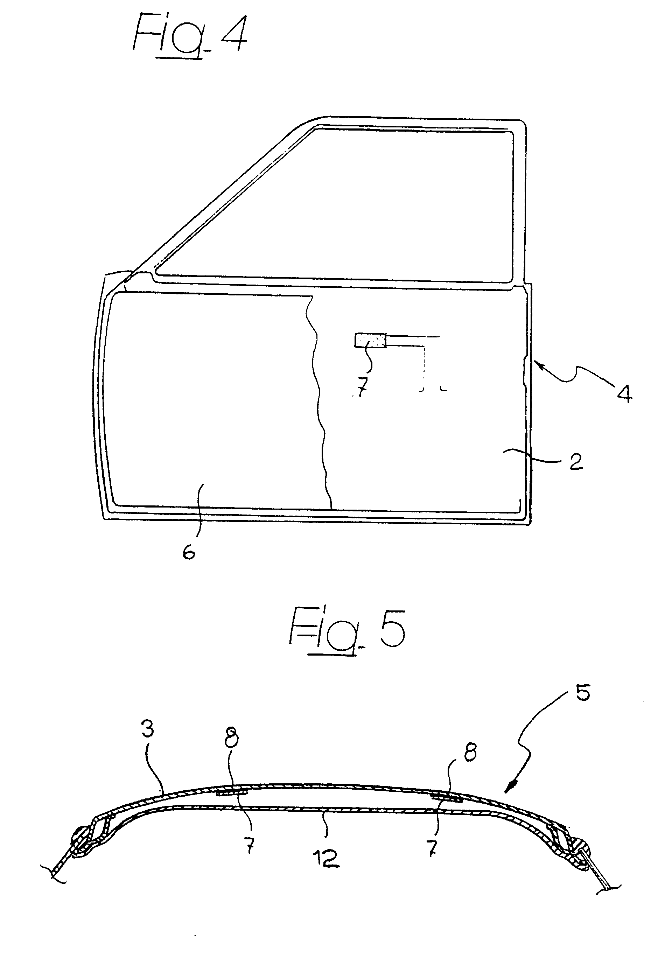

As diagrammatically shown in figure 4, an inner lining panel 6, normally made of plastics material and thus generally rigid, is secured in a known way to the outer sheet metal panel 2 of each lateral door 4. Likewise, as diagrammatically shown in figure 5, an inner lining panel 12, also normally made of plastics material and thus relatively rigid, is secured to the outer sheet metal panel 3 of the roof 5.

According to the invention, piezo-electric thin-plate actuators/transducers 7 of a known type, for instance manufactured and marketed by EDO CORPORATION, U.S.A., are rigidly fixed onto the inner surfaces of the outer sheet metal panels 2,3 of the lateral doors 4 and of the roof 5, respectively. In the case of the shown example, the piezo-electric actuators/transducers 7 have a quadrangular shape. Other designs, such as for instance a circular shape, can be also envisaged.

For the reasons which will become more apparent in the following, it is seasonable that each piezo-electric actuator/transducer 7 be fixed in correspondence of a concave or anyhow even only slightly enclosing area of the respective outer sheet metal panel 2,3. A fundamental requirement consists of that the joint between the piezo-electric actuator/transducer 7 and the outer sheet metal panel 2 or 3 be extremely rigid, to the aim of preventing alteration of the vibrational characteristics of the piezo-electric actuator/transducer upon energization thereof.

To such effect, and as diagrammatically shown in figure 3 with reference to one of the lateral doors 4, fixing is performed by bonding, through a layer of a high elasticity modulus resin, preferably a two-component epoxy resin, forming a fitting and connecting rigid pad 8 between the joining surfaces of the outer sheet metal panel 2 (which as previously stated is preferably curved) and of the piezo-electric actuator/transducer 7 (which is normally flat).

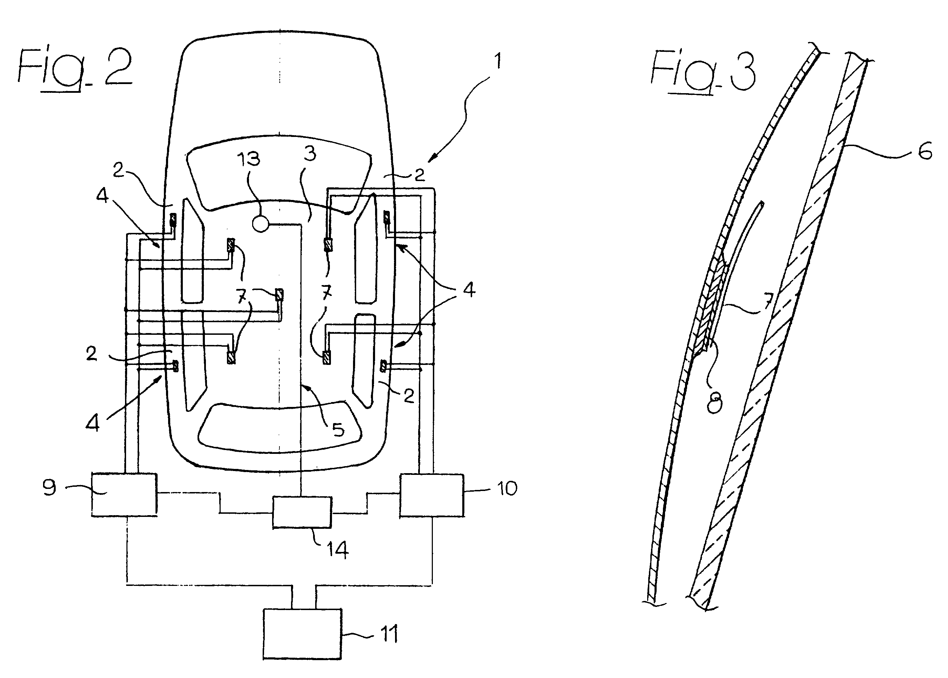

Figure 2 diagrammatically depicts by way of example one possible distribution of the piezo-electric actuators/transducers 7 on the outer sheet metal panels 2,3. According to this arrangement, a single piezo-electric actuator/transducer 7 is applied to the outer sheet metal panel 2 of each lateral door 4, and a plurality (five in the shown example) of piezo-electric actuators/transducers 7 are applied to the outer sheet metal panel 3 of the roof 5. This distribution, which following experimental tests proved particularly effective, is however not to be considered in a limiting way: for instance, two or more piezo-electric actuators/transducers 7 may be applied to the outer sheet metal panel 2 of each lateral door 4. Moreover, similar piezo-electric actuators/transducers 7 could also be applied to the floor and /or to the outer panel of a rear door, if any, of the vehicle.

Layered arrangements of the piezo-electric actuators/transducers 7 are also envisageable.

Reverting to the example shown in figure 5, the piezo-electric actuators/transducers 7 corresponding to the outer sheet metal panels 2 of the left-side lateral doors 4, together with the piezo-electric actuators/transducers 7 applied to the left-side area of the outer sheet metal panel 3 of the roof 5, are electrically connected in parallel to a left-side driver unit 9. Likewise, the piezo-electric actuators/transducers 7 corresponding to the outer sheet metal panels 2 of the right-side lateral doors 4, together with the piezo-electric actuators/transducers 7 applied to the right-side area of the outer sheet metal panel 3 of the roof 5, are electrically connected in parallel to a right-side driver unit 10. The driver units 9 and 10, through which energization of the respective piezo-electric actuators/transducers 7 is piloted, are normally constituted by amplifiers, which are part of a sound reproduction system of a generally conventional type, comprising a sound pick-up and/or a sound receiver device 11. The sound receiver device may conventionally be comprised of a sound recording support player of mechanical, optical or magnetic type, and the sound receiver device may be constituted by a usual radio receiver.

In practice, in the above disclosed sound reproduction system the conventional loudspeakers are replaced by the assemblies formed by the piezo-electric actuators/transducers 7 and by the outer sheet metal panels 2,3 operatively connected therewith, which operate as vibrating elements for the generation of audio-frequency sounds.

In operation, the remarkable extension of the sound scattering surfaces enables achievement of particular acoustic effects based upon a diffused and enclosing sound field relative to the vehicle passengers. Accordingly, it is possible to reproduce within the vehicle passenger compartment interesting acoustic field effects, which can be summarised as follows:
- surrounding effect (sound box):
   this effect can be obtained since all the main vehicle walls behave like acoustic scatterers. Potentially the whole body may take part to sound field generation;
- surrounding effect superimposed to stereo effect:
   this effect can be achieved in case of a stereophonic binaural recording. The signal related to each channel is delivered separately for instance to the left-side piezo-electric actuators/transducers 7, via the driver unit 9, and to the right-side piezo-electric actuators/transducers 7, via the driver unit 10. This effect can also be extended to four-channel reproduction;
- theatre effect:
   in case sound recording is carried out within a theatre employing a binaural manikin, it is possible to reproduce with high fidelity what is perceived by a listener in a particular acoustic situation due to the environment wherein the soundtrack is recorded, by supplying separately the binaural signal to the left and right side piezo-electric actuators/transducers 7, respectively, after introducing cross-over corrections by means of suitable filters. The subject effect is ensured by the fact that the vehicle passenger compartment has very high characteristics of acoustic absorption and, therefore, it does not contaminate the recorded sound field owing to additional reverberation due to the environment in which the sound is reproduced.

The above-listed particularly pleasant and natural effects are evidently a consequence of the fact that the outer sheet metal panels 2,3 surrounding the passengers inside the vehicle compartment do vibrate and generate the sound field as a whole. In practice the position of the sound source is not perceptible and, therefore, the effect of (normally false) directionality, which are unavoidably associated to the position of the conventional discrete loudspeakers, is suppressed. However, according to what has been previously clarified, the stereophonic effect is safeguarded, whenever provided in the sound recording stage.

Additional positive effects deriving from the configuration of the sound reproduction system of the invention consist of remarkable brilliantness and clarity of the emitted sounds. Due to the presence of a high and well balanced modal density over the entire audible spectrum, a brilliant but not metallic sound quality is perceived. Actually, any metallic effects are drastically reduced by the presence of the inner upholstery panels 6 and 12, which damp and absorb the acoustic energy associated to the high frequency sound waves. This effect could not be obtained in case the piezo-electric actuators/transducers 7 be applied, instead than to the outer sheet metal panels 2,3, to the inner lining panels 6 and 12.

Moreover, the vibrational response promptness of the outer sheet metal panels 2 and 3, also deriving from the specific way of fixing the piezo-electric actuators/transducers 7 as previously disclosed, results into a remarkable clarity of sound even during the opening transients.

Naturally, as a function of the material, of the extension and of the configuration of the vibrating outer panels, generally conventional expedients may be employed so as to improve emission of the acoustic frequency ranges, particularly of the lower ones.

It will be apparent that the possibilities of application of the invention are numerous, and shall not have to be considered as limited by the preceding description. It is also to be pointed out that the sound reproduction system according to the invention can be applied not only to automobiles, but to any kind of vehicles, even for public transportation (bus, industrial vehicles, agricultural tractors and earth-moving machines, aircrafts, railvehicles, watercrafts etc.).

According to a further embodiment of the invention, the piezo-electric actuators/transducers 7 applied to the outer sheet metal panels of the vehicle structure may be employed, further to sound reproduction, also as active elements of a generally conventional anti-noise control system, so as to pilot vibrations of those outer panels adapted to oppose disturbing acoustic phenomena thereof. Accordingly, in practice the same piezo-electric actuators/transducers 7 can thus simultaneously act both for the cancellation of disturbing acoustic phenomena, through the active anti-noise control system, and for the emission of musical sounds.

Moreover, according to a further peculiar embodiment, the system according to the invention can also be employed for generating sounds outwardly, over a proximal area, i.e. to emit towards the exterior vocal messages generated inside the vehicle. To such effect, a microphone or piezo-electric sensor 13 can be provided within the passenger compartment, for instance in proximity of the driver's seat, which through a related amplifier 14 provides signals to be delivered to the piezo-electric vibrators 7 via the left and/or right drive unit 9,10, respectively.

Naturally the details of construction and the embodiment may be widely varied with respect to what has been disclosed and illustrated, without thereby departing from the scope of the present invention, such as defined in the appended claims.

## Claims

1. A sound reproduction system for vehicles, comprising sound pick-up or sound receiver means (11), amplifier means (9,10) and sound emitter means including vibrating means (7) operatively associated to at least one panel (2,3) forming part of a vehicle structure (1) and adapted to vibrate so as to produce audio-frequency sounds, characterised in that:
- said at least one panel consists of an outer sheet metal wall (2,3) of the vehicle body (1) to which a generally rigid inner lining wall (6,12) is connected in a known way,
- said vibrating means comprise at least one piezo-electric thin plate actuator/transducer (7), known per se, rigidly secured to the inner surface of said outer sheet metal wall (2,3), at a spaced-apart location relative to said inner lining wall (6,12).

2. Sound reproduction system according to claim 1, characterised in that said at least one piezo-electric thin plate actuator/transducer is fixed in correspondence of a substantially concave area of said body outer wall (2,3), and in that a fitting and connecting rigid pad element (8) is interposed between said at least one piezo-electric thin plate actuator/transducer (7) and said substantially concave area of said body outer wall (2,3).

3. Sound reproduction system according to claim 2, characterised in that said pad element (8) is formed by a layer of high elasticity modulus resin.

4. Sound reproduction system according to claim 3, characterised in that said resin is an epoxy resin.

5. Sound reproduction system according to claim 1, characterised in that it comprises a plurality of said piezo-electric thin plate actuators/transducers (7) applied to the body outer walls (2,3) defining at least the vehicle lateral doors (4) and roof (5), respectively.

6. Sound reproduction system according to claim 5, characterised in that at least one piezo-electric thin plate actuator/transducer (7) is applied onto each door (4) outer wall (2), a plurality of said piezo-electric thin plate actuators/transducers (7) are applied onto the roof (5) outer wall (3), and in that the sound reproduction system includes a pair of driver units (9,10) for piloting said piezo-electric thin plate actuators/transducers (7), of which one is operatively connected to the piezo-electric thin plate actuator/transducer (7) corresponding to the or each lateral door (4) of one vehicle side and to part of said plurality of piezo-electric thin plate actuators/transducers (7) corresponding to the roof (5), and the other is operatively connected to the piezo-electric thin plate actuator/transducer (7) corresponding to the or each lateral door (4) of the other vehicle side and to the remaining part of said plurality of piezo-electric thin plate actuators/transducers (7) corresponding to the roof (5).

7. Sound reproduction system according to any of the preceding claims characterised in that it further comprises microphone means (13) arranged inside the vehicle and operatively connected to said at least one piezo-electric thin plate actuator/transducer (7) for producing sounds outwardly, over a proximal area, corresponding to vocal messages generated within the vehicle.

8. Sound reproduction system according to any of the preceding claims characterised in that said least one piezo-electric thin plate actuator/transducer (7) is further operatively connected to an active anti-noise vehicle control system.

9. A vehicle comprising a sound reproduction system according to any of claims 1 through 8.

## Patentansprüche

1. Ein Tonwiedergabesystem für Fahrzeuge, umfassend eine Tonaufnahme- oder Tonempfangseinrichtung (11), Verstärkereinrichtungen (9, 10) und Tonabgabeeinrichtungen, die Vibrationseinrichtungen (7) umfassen, die in Wirkzusammenhang mit mindestens einer Platte (2, 3) stehen, die Teil der Fahrzeugstruktur (1) ist, und die so ausgestaltet sind, daß sie schwingen, um Tonfrequenzen zu produzieren, dadurch gekennzeichnet daß:
- die mindestens eine Platte aus einer äußeren Blechwand (2, 3) des Fahrzeugkörpers (1) besteht, mit welcher eine im allgemeinen steife innere Futterwand (6, 12) nach bekannter Weise verbunden ist,
- die Vibrationseinrichtungen mindestens einen piezo-elektrischen dünnen Plattenantrieb/-wandler (7) umfassen, der an sich bekannt ist, und der fest mit der inneren Oberfläche der äußeren Blechwand (2, 3) an einem relativ zur inneren Futterwand (6, 12) beabstandeten Platz verbunden ist.

2. Tonwiedergabesystem gemäß Anspruch 1, dadurch gekennzeichnet, daß der mindestens eine piezo-elektrische dünne Plattenantrieb/-wandler in Wechselwirkung zu einer im wesentlichen konkaven Fläche der Körperaußenwand (2, 3) befestigt, und daß ein befestigendes und verbindendes steifes Füllelement (8) zwischen dem mindestens einen piezo-elektrischen dünnen Plattenantrieb/-wandler (7) und der im wesentlichen konkaven Fläche der Körperaußenwand (2, 3) eingeschoben ist.

3. Tonwiedergabesystem gemäß Anspruch 2, dadurch gekennzeichnet, daß das Füllelement (8) durch eine Harzschicht mit hohem Elastizitätsmodul gebildet wird.

4. Tonwiedergabesystem gemäß Anspruch 3, dadurch gekennzeichnet, daß der Harz ein Epoxidharz ist.

5. Tonwiedergabesystem gemäß Anspruch 1, dadurch gekennzeichnet, daß es eine Mehrzahl von piezo-elektrischen dünnen Plattenantrieben/-wandlern (7) umfaßt, die an den Körperaußenwänden (2, 3) angebracht sind, die zumindest jeweils die Fahrzeugseitentüren (4) und das Fahrzeugdach (5) definieren.

6. Tonwiedergabesystem gemäß Anspruch 5, dadurch gekennzeichnet, daß mindestens ein piezo-elektrischer dünner Plattenantrieb/-wandler (7) an jeder Außenwand (2) einer Tür (4) angebracht ist, eine Mehrzahl der piezo-elektrischen dünnen Plattenantrieben/wandlern (7) auf der Außenwand (3) des Daches (5) angebracht sind, und daß das Tonwiedergabesystem ein Paar von Antriebseinheiten (9, 10) zum Steuern der piezo-elektrischen dünnen Plattenantriebe/-wandler (7) umfaßt, von denen eine wechselwirkend mit dem piezo-elektrischen dünnen Plattenantrieb/-wandler (7) von der beziehungsweise jeder der Seitentüren (4) einer Fahrzeugseite und mit einem Teil der Mehrzahl der piezo-elektrischen dünnen Plattenantriebe/-wandler (7) von dem Dach (5) verbunden ist, und die andere wechselwirkend mit dem piezo-elektrischen dünnen Plattenantrieb/-wandler (7) von der beziehungsweise jeder Seitentür (4) der anderen Fahrzeugseite und mit dem verbleibenden Teil der Mehrzahl der piezo-elektrischen dünnen Plattenantriebe/-wandler (7) von dem Dach (5) verbunden ist.

7. Tonwiedergabesystem gemäß einem der vorhergehenden Ansprüche, dadurch gekennzeichnet, daß es ferner eine Mikrofoneinrichtung (13) umfaßt, die innerhalb des Fahrzeugs angeordnet ist und wechselwirkend mit dem piezo-elektrischen dünnen Plattenantrieb/-wandler (7) verbunden ist, um außerhalb über einen nächstgelegenen Bereich Schall, entsprechend mündlichen Mitteilungen, die innerhalb des Fahrzeuges erzeugt werden, zu produzieren.

8. Tonwiedergabesystem gemäß einem der vorhergehenden Ansprüche, dadurch gekennzeichnet, daß der mindestens eine piezo-elektrische dünne Plattenantrieb/-wandler (7) ferner wechselwirkend mit einem aktiven Antigeräuschfahrzeugkontrollsystem verbunden ist.

9. Ein Fahrzeug, umfassend ein Tonwiedergabesystem gemäß einem der Ansprüche 1 bis 8.

## Revendications

1. Système de reproduction sonore pour véhicule, comprenant un dispositif (11) capteur de sons ou récepteur de sons, un dispositif amplificateur (9, 10) et un dispositif émetteur de sons comprenant un dispositif vibrant (7) associé pendant le fonctionnement à au moins un panneau (2, 3) faisant partie d'une structure (1) du véhicule et destiné à vibrer pour la production de sons d'audiofréquences, caractérisé en ce que :
un panneau au moins est constitué d'une paroi externe (2, 3) d'une feuille métallique de la carrosserie (1) du véhicule à laquelle est raccordée de manière connue une paroi interne de doublure (6, 12) qui est rigide de façon générale,
le dispositif vibrant comprenant au moins un organe transducteur de manoeuvre (7) sous forme d'une mince plaque piézoélectrique, de type connu par lui-même, fixé rigidement à la surface interne de la paroi externe (2, 3) de feuille métallique, à un emplacement distant de la paroi interne de doublure (6,12).

2. Système de reproduction sonore selon la revendication 1, caractérisé en ce qu'au moins un organe transducteur de manoeuvre sous forme d'une mince plaque piézoélectrique est fixé à un emplacement correspondant à une zone pratiquement concave de la paroi externe (2, 3) de la carrosserie, et en ce qu'un élément (8) de patin rigide de montage et de raccordement est disposé entre au moins un organe transducteur de manoeuvre (7) sous forme d'une mince plaque piézoélectrique et la région pratiquement concave de la paroi externe (2, 3) de la carrosserie.

3. Système de reproduction sonore selon la revendication 2, caractérisé en ce que l'élément de patin (8) est formé par une couche d'une résine ayant un module élevé d'élasticité.

4. Système de reproduction sonore selon la revendication 3, caractérisé en ce que la résine est une résine époxyde.

5. Système de reproduction sonore selon la revendication 1, caractérisé en ce qu'il comprend plusieurs organes transducteurs de manoeuvre (7) sous forme de minces plaques piézoélectriques appliqués aux parois externes (2, 3) de la carrosserie et délimited au moins les portes latérales (4) et le toit (5) du véhicule respectivement.

6. Système de reproduction sonore selon la revendication 5, caractérisé en ce qu'au moins un organe transducteur de manoeuvre (7) sous forme d'une mince plaque piézoélectrique est appliquée sur la paroi externe (2) de chaque porte (4), plusieurs des organes transducteurs de manoeuvre (7) sous forme de minces plaques piézoélectriques sont appliqués à la paroi externe (3) du toit (5), et en ce que le système de reproduction sonore comprend deux unités de pilotage (9, 10) destinées à piloter les organes transducteurs de manoeuvre (7) sous forme de minces plaques piézoéléctriques, dont l'un est raccordé pendant le fonctionnement à l'organe transducteur de manoeuvre (7) sous forme d'une mince palque piézoéléctrique qui correspond à la porte ou à chaque porte latérale (4) d'un côté du véhicule et à une partie des organes transducteurs de manoeuvre (7) sous forme de minces plaques piézoélectriques qui correspondent au toit (5), et l'autre est connecté pendant le fonctionnement à l'organe transducteur de manoeuvre (7) sous forme d'une mince plaque piézoélectrique qui correspond à la porte ou à chaque porte latérale (4) de l'autre côté du véhicule et à la partie restante des organes transducteurs de manoeuvre (7) sous forme de minces plaques piézoélectriques et qui correspondent au toit (5).

7. Système de reproduction sonore selon l'une quelconque des revendications précédentes, caractérisé en ce qu'il comporte en outre un dispositif à microphone (13) placé à l'interieur du véhicule et connecté pendant le fonctionnement à au moins un organe transducteur de manoeuvre (7) sous forme d'une mince plaque piézoélectrique pour la production de sons vers l'extérieur, dans une zone proche, correspondant à des messages vocaux créés à l'intérieur du véhicule.

8. Système de reproduction sonore selon l'une quelconque des revendications précédentes, caractérisé en ce que le transducteur de manoeuvre (7) sous forme d'une mince plaque piézoélectrique au moins est en outre connecté pendant le fonctionnement à un système antibruit actif du véhicule.

9. Véhicule comprenant un système de reproduction sonore selon l'une quelconque des revendications 1 à 8.
